# FASCICULE DE BREVET EUROPEEN

(11) **EP 4 051 879 B1**
(45) Date de publication et mention de la délivrance du brevet: **14.08.2024**
(21) Numéro de dépôt: 20807836.0
(22) Date de dépôt: 28.10.2020
(51) Int. Cl.: F01D 9/04, F01D 5/28

(54) **TURBINE DE TURBOMACHINE A DISTRIBUTEUR EN CMC AVEC REPRISE D'EFFORT**
TURBOMASCHINENTURBINE MIT EINER CMC-DÜSE MIT LASTVERTEILUNG
TURBOMACHINE TURBINE HAVING A CMC NOZZLE WITH LOAD SPREADING

(30) Priorité: 31.10.2019 FR 1912249
(43) Date de publication de la demande: 07.09.2022
(73) Titulaire: Safran Aircraft Engines, 75015 Paris (FR)
(72) Inventeur: TABLEAU, Nicolas, Paul, 77550 Moissy-Cramayel (FR); CONGRATEL, Sébastien, Serge, Francis, 77550 Moissy-Cramayel (FR); DANIS, Antoine, Claude, Michel, Etienne, 77550 Moissy-Cramayel (FR); GIMAT, Matthieu, Arnaud, 77550 Moissy-Cramayel (FR); LEPRETRE, Gilles, Gérard, Claude, 77550 Moissy-Cramayel (FR)
(74) Mandataire: Cabinet Beau de Loménie
(86) Numéro de dépôt international: PCT/FR2020/051944
(87) Numéro de publication internationale: WO 2021/084203

(56) Documents cités:
- EP-A2- 3 244 016
- FR-A1- 3 080 146
- US-A- 5 074 752
- US-A1- 2011 311 353

## Description

### Domaine Technique

L'invention concerne des turbomachines, notamment des turbomoteurs aéronautiques ou des turbines industrielles, et plus particulièrement un distributeur de turbine en matériau composite à matrice céramique ou à matrice au moins partiellement en céramique, désigné ci-après par matériau CMC.

### Technique antérieure

Le domaine d'application de l'invention est notamment celui des moteurs aéronautiques à turbine à gaz. L'invention est toutefois applicable à d'autres turbomachines, par exemple des turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique noté CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés de résistance mécanique qui les rendent aptes à constituer des éléments de structure et la capacité à conserver ces propriété de résistance mécanique à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011 /080443 décrivent la réalisation d'aubes de roues mobiles de turbomachines en CMC à plateforme et talon intégrés. L'utilisation de matériaux CMC pour des distributeurs de turbine a aussi été proposée, notamment dans les documents WO 2010/146288, FR 2 979 662 et EP 2 443 318. Une autre distributeur en CMC qui présente les caractéristiques techniques du préambule de la revendication 1 est divulgué dans le document FR 3 080 146 A1.

Un distributeur de turbine métallique traditionnel présente une forme de couronne composée de plusieurs secteurs assemblés, chaque secteur comprenant une plateforme intérieure, une plateforme extérieure et une pluralité de pales s'étendant entre les plateformes intérieure et extérieure et solidaires de celles-ci. Les plateformes intérieures juxtaposées circonférentiellement bout-à-bout forment une virole intérieure et les plateformes extérieures juxtaposées circonférentiellement bout-à-bout forment une virole extérieure. Les viroles intérieure et extérieure délimitent la veine d'écoulement de gaz dans l'étage distributeur.

Introduire un distributeur, par exemple un distributeur haute pression, en CMC permet d'augmenter la température maximale tolérée par rapport à un distributeur métallique, et ainsi de diminuer la quantité d'air de refroidissement utilisée. Cela permet ainsi d'augmenter les performances de la turbomachine.

Toutefois, le CMC, par ses propriétés différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui exacerbe les différences de coefficients de dilatation thermique entre les matériaux, les efforts aérodynamiques subis par un distributeur haute pression étant en outre élevés dans cette zone de turbine.

Il est connu des distributeurs en CMC comme par exemple un distributeur de turbine comportant une virole externe de support solidaire d'un carter, une virole interne de support, et une pluralité de secteurs d'anneau en CMC formant une couronne s'étendant entre la virole externe de support et la virole interne de support. Chaque secteur d'anneau est en appui sur les viroles interne et externe de support et comporte une plateforme intérieure, une plateforme extérieure, et au moins une pale s'étendant entre la plateforme extérieure et la plateforme intérieure et solidaire de celles-ci.

Toutefois, il existe un besoin d'améliorer les solutions connues en ce qui concerne la solidarisation déterministe du secteur d'anneau en CMC avec la virole interne, notamment en termes de maintien au moins axial du secteur d'anneau et en termes de reprise des efforts aérodynamiques.

Par ailleurs, un important différentiel de pressions est exercé sur le carter sous le distributeur dans la direction radiale. Ce carter sert à créer une étanchéité entre le rotor et le stator. Cet écart de pression est source d'un effort qui, s'il était exercé sur le CMC, serait trop élevé compte tenu des admissibles du matériau.

Il est connu également, notamment des documents FR 3 061 928 et FR 2 973 435, le distributeur tel que décrit ci-dessus et comportant en outre un mât de renforcement s'étendant radialement à l'intérieur des aubes entre les deux plateformes permettant au distributeur d'être maintenu au carter par le mât.

Cependant, une telle solution reprend aussi bien via le mât les efforts relatifs au différentiel de pression sous le distributeur que les efforts aérodynamiques sur la couronne en CMC. En outre, pour les raisons évoquées ci-dessus relatives au comportement mécanique différent entre CMC et matériau métallique, il est difficile de positionner la partie CMC sur l'environnement métallique en la bridant.

Il est connu d'assurer les positionnements tangentiels et axiaux de la pale en CMC via des ergots axiaux et tangentiels de mise en position sur le mât permettant de plaquer la pale en CMC sur le mât métallique en fonctionnement grâce aux efforts aérodynamiques axiaux et tangentiels.

Cependant, lors du fonctionnement de la turbine, un jeu radial important est généré entre les parties métalliques telles que le mât, et les viroles interne et externe de support et la pale que le mât traverse, bien qu'à froid ce jeu soit nul. Plus particulièrement, en fonctionnement, du fait du coefficient de dilatation inférieur sur la pale en CMC par rapport au matériau métallique du mât et des viroles, un jeu radial se crée au niveau de l'interface entre la pale en CMC et des viroles interne et externe de supports.

L'ouverture de ces jeux en fonctionnement pose deux problèmes. En premier lieu, des fuites supplémentaires sont créées, diminuant la performance de la turbomachine. Et, en second lieu, si des jeux radiaux sont créés à la fois sur les parties supérieures et inférieures du distributeur, la mise en position radiale de la pale n'est plus assurée. En l'absence de cette mise en position radiale déterministe, plusieurs conséquences néfastes peuvent survenir telles que des mouvements radiaux intempestifs de la pale (vibrations) et/ou la création de marche, c'est-à-dire de palier, dans la veine.

Il existe donc un besoin d'améliorer le maintien déterministe du distributeur en CMC de cette solution.

### Exposé de l'invention

L'invention vise à pallier les inconvénients mentionnés ci-dessus et à passer outre les difficultés mentionnées ci-dessus en proposant une turbine de turbomachine comprenant un distributeur de turbine au moins en partie en CMC dont le montage est simplifié et adapté pour maintenir ses secteurs d'anneau de façon déterministe tout en permettant aux secteurs de se déformer indépendamment des pièces métalliques en interface, et en garantissant une étanchéité satisfaisante.

Plus particulièrement, l'invention vise à limiter, voire annuler, le jeu radial s'ouvrant en fonctionnement entre le mât et la pale en CMC, et ainsi de maîtriser le positionnement radial de la pale en CMC, à l'aide des efforts axiaux et tangentiels aérodynamiques en veine.

Un objet de l'invention propose une turbine de turbomachine comprenant un carter, une virole externe de support en métal solidaire du carter, une virole interne de support en métal, et un distributeur annulaire de turbine définissant une direction axiale et une direction radiale et comportant une pluralité de secteurs de distributeur en matériau composite à matrice céramique formant une couronne s'étendant entre la virole externe de support et la virole interne de support.

En outre, chaque secteur comporte un mât métallique, une plateforme intérieure, une plateforme extérieure et au moins une pale s'étendant radialement entre les plateformes intérieure et extérieure et présentant un profil creux définissant un logement interne s'étendant radialement, les plateformes intérieure et extérieure présentant chacune un orifice communiquant avec ledit logement interne de la pale, et le mât traversant lesdits orifices et le logement interne et étant fixé audit carter d'une part et en liaison avec ledit secteur annulaire d'autre part.

Selon l'invention, chaque pale comprend au moins un premier épaulement radial s'étendant en saillie selon la direction axiale depuis une surface intérieure de la pale vers l'intérieur de la pale, et chaque mât comprend au moins un second épaulement s'étendant en saillie selon la direction axiale depuis une surface extérieure du mât vers l'extérieur du mât configurée pour coopérer avec un premier épaulement selon la direction radiale et plaquer radialement la pale contre le mât.

L'invention permet ainsi de limiter voire d'annuler le jeu radial s'ouvrant en fonctionnement entre le mât métallique et la pale en CMC et ainsi de réduire voire de supprimer l'incertitude sur la position de la pale.

Les épaulements prévus à la fois sur l'intérieur de la pale creuse et sur l'extérieur du mât permettent de résoudre l'absence de déterminisme dans la mise en position de la pale, les épaulements permettant de plaquer radialement la pale vers l'intérieur ou l'extérieur à l'aide des efforts aérodynamiques en veine.

En fonctionnement normal, la résultante des efforts aérodynamiques sur la pale en CMC permet de plaquer le fairing en CMC sur une des viroles, interne ou externe, et ainsi de le positionner radialement. L'invention permet d'ajouter des solutions de positionnement radial déterministes, et ainsi de maîtriser la position de l'aube en CMC dans tous les types de fonctionnement du moteur.

Selon l'invention, au moins un premier épaulement comprend une première portion biseautée formant un premier angle non nul avec la direction axiale et au moins un second épaulement comprend une seconde portion biseautée formant un second angle non nul avec la direction axiale, le premier et le second angles étant de même mesure.

Les ergots biseautés fournissent un maintien en position radial déterministe de la pale en CMC sur le mât métallique. Ces biseaux rapportés sur le mât métallique permettent d'utiliser les efforts axiaux aérodynamiques pour plaquer de manière déterministe la pale CMC vers le haut de la veine au niveau de la butée radiale de la virole externe de support 360°, en comblant le jeu radial créé par la dilatation différentielle entre le CMC et les pièces métalliques à chaud.

Selon un premier aspect de la turbine, le premier et le second angles sont chacun compris entre 10° et 80° pour permettre un plaquage efficace.

Un angle faible permet une meilleure mise en position radiale du distributeur en CMC à la limite du blocage radial.

En dessous d'une valeur de 10° pour les premier et second angles, les dilatations différentielles entre le mât métallique et le distributeur en CMC peuvent devenir problématiques au niveau des contraintes radiales à chaud.

Au-delà de 80° pour les premier et second angles, les faibles pentes inclinées peuvent permettre un glissement radial potentiel du distributeur en CMC vis-à-vis du mât métallique.

Selon un deuxième aspect de la turbine, ledit au moins un second épaulement est disposé selon la direction radiale entre le premier épaulement avec lequel il coopère pour réaliser le plaquage radial et la virole externe de support pour plaquer la pale contre la virole interne de support.

Selon un troisième aspect de la turbine, ledit au moins un second épaulement est disposé selon la direction radiale entre le premier épaulement avec lequel il coopère pour réaliser le plaquage radial et la virole interne de support pour plaquer la pale contre la virole externe de support.

Selon un quatrième aspect de la turbine, la turbine peut comprendre un premier épaulement et un troisième épaulement sur la pale comportant respectivement une première et une troisième portions biseautées formant respectivement un premier angle et un troisième angle avec la direction axiale, ainsi qu'un deuxième épaulement et un quatrième épaulement sur le mât comportant respectivement une deuxième et une quatrième portions biseautées formant respectivement un deuxième angle et un quatrième angle avec la direction axiale, le premier et le deuxième angles étant de même mesure et le troisième et le quatrième angles étant de même mesure et différents du premier et second angles.

Cette configuration permet d'assurer le maintien de la position radiale de la pale en fonctionnement par rapport au mât.

Selon un cinquième aspect de la turbine, les premier et deuxième épaulements et/ou les troisième et quatrième épaulements sont destinés à coopérer par complémentarité de forme. A cet effet, l'angle des premier et deuxième angles et/ou l'angle des troisième et quatrième angles sont égaux en valeur absolue et de signe opposés.

Selon un sixième aspect de la turbine, le premier épaulement est présent au voisinage de l'extrémité radiale externe de la pale suivant la direction radiale tandis que le troisième épaulement est présent au voisinage de l'extrémité radiale interne de la pale suivant la direction radiale.

Selon un septième aspect de la turbine, le mât peut être creux. Le mât permet ainsi d'amener de l'air dans la cavité radialement à l'extérieur de la virole externe afin de la pressuriser et ainsi éviter que l'air circulant dans la veine s'étendant entre les plateformes internes et externes des secteurs d'anneau soit réintroduit hors de cette veine et ne réduise ainsi la performance et n'augmente le risque de surchauffe des pièces.

Selon un huitième aspect de la turbine, le mât peut comprendre au moins une portion en saillie dans la direction axiale en liaison avec la pale pour maintenir la pale en position.

Dans un autre mode de réalisation de la turbine, la virole métallique externe peut comprendre un orifice pour chaque mât, et, pour chaque secteur, le mat peut traverser lesdits orifices des plateformes intérieure et extérieure, ledit logement interne, et un des orifices de la virole métallique externe, et comprendre au moins une saillie d'accrochage ayant au moins une portion s'étendant depuis une extrémité radialement externe dans une direction à l'opposé du centre du mât et dans, ou tangentiellement à, un plan orthogonal à la direction radiale, ladite au moins une saillie d'accrochage coopérant avec une face radialement externe de la virole externe de support. Cette liaison à l'étanchéité améliorée permet également de supprimer de nombreuses zones d'interface.

En outre, la virole externe de support peut être réalisée en une seule pièce, c'est-à-dire être non sectorisée. Cela permet de monter le mât radialement depuis l'extérieur de la virole externe de support et de limiter au maximum les fuites qui seraient présentes dans le cas d'une virole sectorisée.

Ladite au moins une saillie d'accrochage du mât de chaque pale peut également s'étendre dans un plan, et la face radialement externe de la virole externe de support peut comprendre une facette de réception d'une saillie d'accrochage pour chaque pale, chaque facette étant plane, c'est-à-dire s'étendant dans un plan défini par seulement deux directions non circulaires. Les facettes réalisées pour chacune des pales permettent de présenter un contact plan/plan entre le mât et la virole, améliorant ainsi l'étanchéité entre les deux éléments facilitant le positionnement du mât. La virole est usinée de manière à présenter autant de « facettes » que de pales et donc que de mâts.

La virole externe de support peut comprendre une extrémité amont et une extrémité aval selon la direction axiale, et un épaulement s'étendant dans la direction radiale depuis l'une des extrémités amont ou aval de la virole externe sur toute la circonférence de la virole externe de support, et le mât de chaque pale peut comprendre une saillie d'anti-rotation du mât par rapport à la pale s'étendant dans la direction axiale depuis l'extrémité radialement externe du mât et formant un appui s'étendant dans une direction circonférentielle de la virole externe de support venant en appui dans la direction axiale contre l'épaulement de la virole externe de support. L'appui du mât sur l'épaulement de la virole externe de support permet de maintenir le mât et ainsi la pale de toute rotation autour d'un axe radial.

La virole externe de support peut comprendre en outre, pour chaque pale, un pion de centrage s'étendant en saillie radiale depuis ladite face radialement externe, et le mat de chaque pale peut comprendre un orifice de centrage configuré pour coopérer avec un pion de centrage. Le pion de centrage sur la virole externe de support et l'orifice de centrage prévu sur le mât, par exemple sur une saillie de centrage s'étendant depuis l'extrémité radiale externe du mât ou directement sur une ou la saillie d'accrochage, permet de fournir un premier point d'anti-rotation.

De préférence, le pion de centrage est prévu sur une portion aval de la virole externe de support par rapport au sens du flux gazeux destiné à traverser la veine définie par le distributeur annulaire en CMC.

Dans une variante, la virole externe de support peut comprendre une extrémité amont et une extrémité aval selon la direction axiale, et des vis associées à des moyens de maintien en position radiale et des orifices taraudés maintenant une portion du mât sur la virole externe de support, et de préférence sur une portion amont de la virole externe ou à la fois sur une portion amont et une portion aval de la virole externe.

Le mât peut aussi comprendre au moins une portion en saillie dans la direction axiale en liaison avec la pale pour maintenir la pale en position.

De préférence, pour chaque secteur, les vis et les orifices taraudés sont disposées en aval de l'orifice de réception du mât et le pion de centrage est disposé en amont de l'orifice de réception du mât. Les orifices taraudés sont préférentiellement réalisés dans des oreilles prévues dans la saillie d'accrochage.

L'invention a également pour objet, une turbomachine comprenant une turbine de turbomachine telle que définie ci-dessus.

L'invention a aussi pour objet, un aéronef comprenant au moins une turbomachine telle que définie ci-dessus.

### Brève description des dessins

[Fig. 1] La figure 1 est une vue schématique en coupe d'un secteur d'une turbine selon un premier mode de réalisation de l'invention.
[Fig. 2] La figure 2 est une vue schématique assemblée d'une virole externe de support et un mât de la turbine de la figure 1.
[Fig. 3] La figure 3 représente une vue schématique éclatée d'une virole externe de support et un mât de la turbine de la figure 1.
[Fig. 4] La figure 4 représente une vue schématique en coupe selon un plan comprenant la direction axiale et la direction radiale d'un secteur de turbine de la figure 1.
[Fig. 5] La figure 5 représente une vue schématique en coupe selon un plan comprenant la direction axiale et la direction radiale d'un secteur de turbine selon un deuxième mode de réalisation de l'invention.
[Fig. 6] La figure 6 représente une vue schématique en coupe selon un plan comprenant la direction axiale et la direction radiale d'un secteur de turbine selon un troisième mode de réalisation de l'invention.
[Fig. 7] La figure 7 représente une vue schématique en coupe selon un plan comprenant la direction axiale et la direction radiale d'un secteur de turbine selon un quatrième mode de réalisation de l'invention.

### Description des modes de réalisation

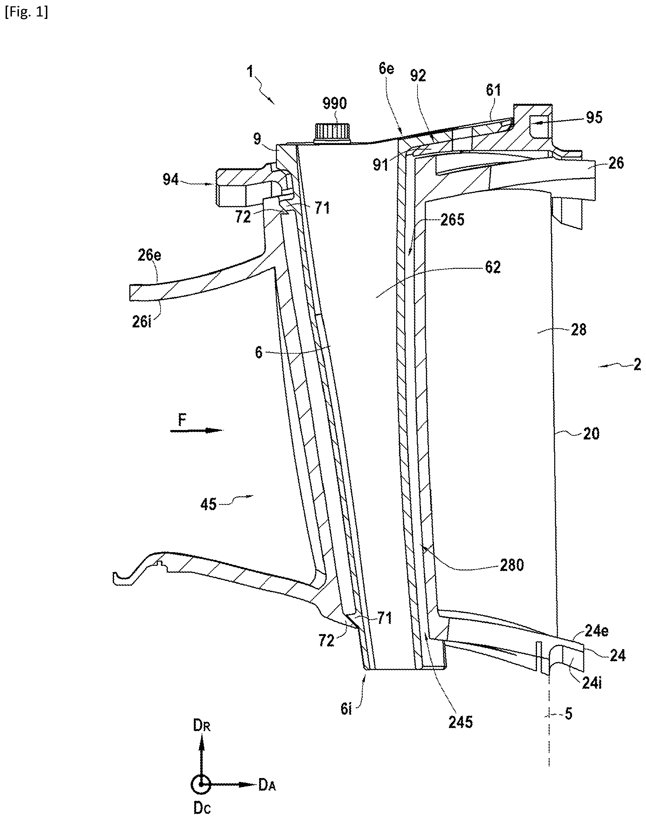

Sur la figure 1 est illustrée une vue schématique en coupe d'un secteur d'une turbine selon un mode de réalisation de l'invention.

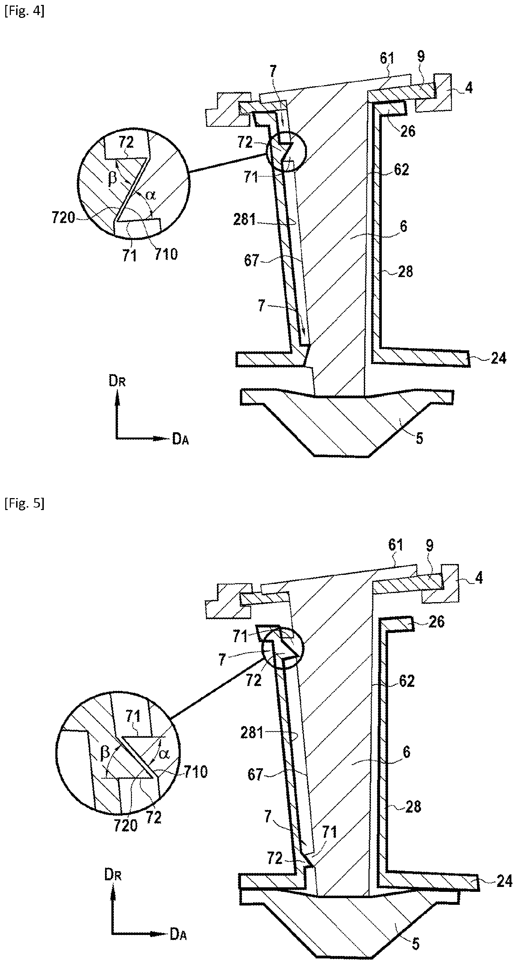

Une turbine 1 haute pression d'une turbomachine, par exemple un turbomoteur aéronautique, telle que montrée partiellement sur la figure 1, comprend une pluralité de distributeurs fixes 2 qui alternent avec des roues mobiles dans le sens d'écoulement du flux gazeux F, indiqué par une flèche sur la figure 1, dans la turbine 1 et qui sont montés dans un carter 4 de turbine (illustré sur les figures 5 à 8).

Chaque roue mobile comprend une pluralité d'aubes ayant une virole intérieure, et au moins une pale s'étendant depuis la virole intérieure et reliée à celle-ci. Du côté intérieur de la virole intérieure, l'aube se prolonge par un pied engagé dans un logement d'un disque. Du côté extérieur, le sommet des aubes est en regard d'un matériau abradable porté par un anneau pour assurer l'étanchéité aux sommets des aubes.

Dans tout le présent texte, les termes « intérieur » ou « interne » et « extérieur » ou « externe » sont utilisés en référence à la position ou l'orientation par rapport à l'axe de rotation de la turbine 1 qui définit la direction axiale D_{A} de la turbine 1.

Les aubes de la roue mobile peuvent être des aubes métalliques traditionnelles ou des aubes en matériau CMC obtenues par exemple comme décrit dans les documents WO 2010/061140, WO 2010/116066, WO 2011/080443.

Au moins l'un des distributeurs 2 de la turbine 1 est formé par réunion de plusieurs secteurs de distributeurs 20 annulaires en matériau CMC pour former un anneau complet. La flèche D_{A} indique la direction axiale du distributeur 2 tandis que la flèche D_{R} indique la direction radiale du distributeur 2 et le repère D_{C} indique la direction circonférentielle.

Chaque secteur 20 de distributeur du distributeur 2 comprend une plateforme intérieure 24, une plateforme extérieure 26 et une pale 28 s'étendant entre les plateformes intérieure et extérieure 24 et 26 et solidaires de celles-ci. En variante, plusieurs pales pourraient s'étendre entre les plateformes intérieure et extérieure d'un même secteur de distributeur. Une fois assemblés avec le carter 4 de la turbine 1, les secteurs 20 forment une unique couronne de distributeurs 2 présentant une virole intérieure formée par la juxtaposition des plateformes intérieures 24 des secteurs 20 et une virole extérieure formée par la juxtaposition des plateformes extérieures 26 des secteurs 20.

La virole intérieure formée par les plateformes intérieures 24 et la virole extérieure formée par les plateformes extérieures 26 forment entre elles une veine 45 d'écoulement de fluide à l'intérieur de laquelle le flux gazeux F s'écoule lors du fonctionnement de la turbine 1.

Dans tout le texte, les termes « amont » et « aval » sont utilisés en référence au sens d'écoulement du flux gazeux F dans la veine 45 indiqué par une flèche.

Les plateformes intérieures 24 présentent chacune une surface extérieure 24e destinée à être en contact avec le flux gazeux F, et donc disposée radialement en regard des plateformes extérieures 26 formant la virole extérieure. Les plateformes intérieures 24 présentent en outre une surface intérieure 24i disposée en regard de l'axe de rotation de la turbine 1.

Les plateformes extérieures 26 présentent chacune une surface extérieure 26e disposée en regard du carter 4 et formée par la surface de la seconde portion des plateformes extérieures 26 orientée radialement vers l'extérieure. Les plateformes extérieures 26 présentent en outre une surface intérieure 26i destinée à être en contact avec le flux gazeux F, et donc disposée radialement en regard des plateformes intérieures 24 formant la virole intérieure et en regard de l'axe de rotation de la turbine 1.

Le distributeur 2 est maintenu entre une virole métallique interne 5 et une virole métallique externe 9 entre lesquelles s'étend la couronne formée par l'assemblage des secteurs d'anneau 20 du distributeur 2. La virole métallique externe 9 est solidaire du carter 4 et présente une surface intérieure 91 et une surface extérieure 92 selon la direction radiale D_{R}.

Comme cela est illustré sur la figure 1, chaque pale 28 possède un profil creux présentant un logement intérieur 280 s'étendant sur toute la hauteur de la pale 28, c'est-à-dire entre la plateforme intérieure 24 et la plateforme extérieure 26 du secteur d'anneau 20. La plateforme intérieure 24 de chaque secteur de distributeur 20 comprend un orifice 245 dont la forme correspond à la section du logement intérieur 280 dans le plan dans lequel s'étend la plateforme intérieure 24. De même, la plateforme extérieure 26 de chaque secteur de distributeur 20 comprend un orifice 265 dont la forme correspond à la section du logement intérieur 280 dans le plan dans lequel s'étend la plateforme intérieure 26. Les orifices 245 et 265 des plateformes intérieure 24 et extérieure 26 sont réalisés dans le prolongement du logement intérieur 280 de la pale 28.

Le logement intérieur 280 de la pale 28 et les orifices 245 et 265 des plateformes intérieure 24 et extérieure 26 peuvent être raccordés à un système de refroidissement délivrant un flux d'air de refroidissement depuis le carter 4 jusque dans la pale 28 et les plateformes intérieure 24 et extérieure 26.

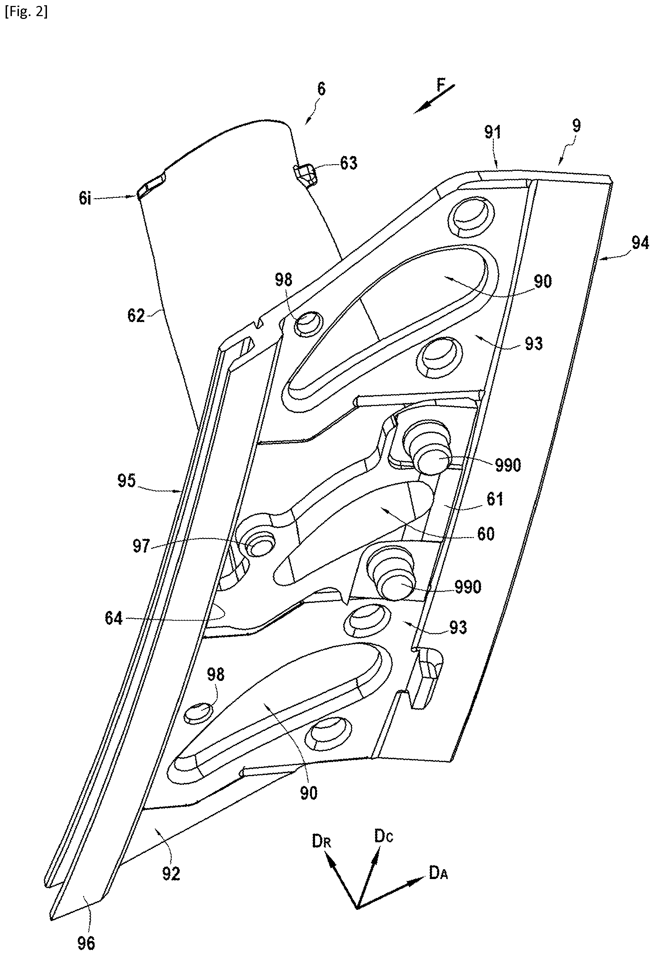

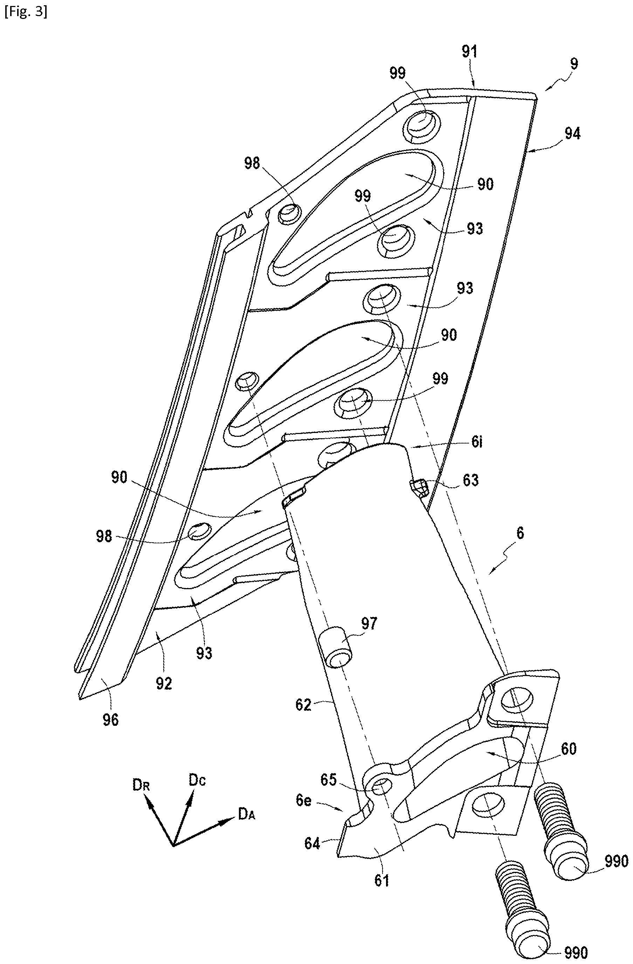

Comme cela est illustré sur la figure 1 et sur les figures 2 et 3 qui présentent deux vues schématiques d'une virole externe de support 9 et d'un mât 6 de la turbine 1 de la figure 1, la turbine 1 comprend en outre, pour chaque secteur de distributeur 20, un mât 6 s'étendant dans la direction radiale D_{R}. Sur la figure 2, la virole métallique externe 9 et le mât 6 sont assemblés, et sur la figure 3, la virole métallique externe 9 et le mât 6 sont éclatés.

Comme cela est illustré sur les figures 1 à 3, le mât 6 comprend une tête de mât 61 en appui sur la surface extérieure 92 de la virole métallique externe 9, et un corps 62 s'étendant en saillie depuis la tête 61 dans la direction radiale D_{R} vers l'intérieur et configuré pour traverser la virole métallique externe 9, et les orifices 245 et 265 des plateformes intérieure 24 et extérieure 26 étant alignés avec le logement intérieur 280 de la pale 28.

En d'autres termes, le mât 6 comprend une première extrémité 6i radialement interne et une seconde extrémité 6e radialement externe, un corps 62 s'étendant sensiblement selon la direction radiale D_{R} entre les première et seconde extrémités 6i et 6e du mât 6, et une tête de mât 61 s'étendant en saillie dans un plan orthogonal à la direction radiale D_{R} depuis la seconde extrémité 6e du mât 6. La tête de mât 61 forme un appui plan s'étendant dans un plan orthogonal à la direction radiale D_{R}.

Le mât 6 est creux pour amener de l'air dans la cavité radialement à l'intérieur de la virole interne afin de la pressuriser et ainsi éviter que l'air circulant dans la veine s'étendant entre les plateformes internes et externes des secteurs distributeur soit réintroduit hors de cette veine et ne réduise ainsi la performance et n'augmente le risque de surchauffe des pièces. Le mât 6 comprend ainsi un logement interne 60 s'étendant dans la direction radiale D_{R} entre les première et seconde extrémités 6i et 6e du mât 6.

La virole métallique externe 9 comprend des orifices 90 de réception du mât 6 conformés pour être traversés par un mât 6, et des facettes 93 planes pour recevoir chacune une tête de mât 61 en appui.

La virole métallique externe 9 comprend une extrémité amont 94 et une extrémité aval 95 selon la direction axiale D_{A}. Sur son extrémité aval 95, la virole métallique externe 9 comprend un épaulement 96 s'étendant dans la direction radiale D_{R} sur toute la circonférence de la virole métallique externe 9. La virole métallique externe 9 comprend en outre, pour chaque pale 28, et donc pour chaque mât 6, un pion de centrage 97 s'insérant dans un orifice 98 prévu dans la virole métallique externe 9. Lorsque le pion de centrage 97 est inséré dans l'orifice 98, le pion 97 s'étend en saillie dans la direction radiale D_{R} depuis la face radialement externe 92 de la virole métallique externe 9. Les pions de centrage 97 sont disposés, dans ce mode de réalisation, sur une portion aval de la virole métallique externe 9, c'est-à-dire à proximité de l'extrémité aval 95 de la virole métallique externe 9, entre l'épaulement 96 et l'extrémité amont 94.

L'extrémité aval 95 de la virole métallique externe 9 forme un crochet ouvert vers l'aval pour la fixation de la virole métallique externe 9 au carter.

La tête de mât 61 comprend un appui d'anti-rotation 64 s'étendant dans la direction circonférentielle D_{C} venant en appui dans la direction axiale D_{A} contre l'épaulement 96 de la virole métallique externe 9 pour maintenir le mât 6 et ainsi la pale 28 avec laquelle le mât 6 coopère de toute rotation autour d'un axe radial. Chaque mat 6 comprend en outre un orifice de centrage 65 conformé pour coopérer avec un des pions de centrage 97 de la virole métallique externe 9.

Dans le mode de réalisation illustré, la virole métallique externe 9 comprend en outre, pour chaque mât 6, des orifices taraudés 99 sur une portion amont et chaque mât 6 comprend des orifices de fixation amont 66 configurés pour se superposer aux orifices taraudés 99 de la virole métallique externe 9 lorsque le mât 6 est monté sur la virole métallique externe 9. La virole métallique externe 9 comprend des vis 990 traversant chacune un orifice de fixation amont 66 du mât 6 et un orifice taraudé pour fixer le mât 6 à la virole métallique externe 9. Les vis 990 sont associées à des moyens de maintien en position radiale pour maintenir une portion du mât 6 sur une portion amont de la virole métallique externe 9.

Dans le cas où chaque secteur de distributeur comprend plusieurs pales, la turbine comprendrait, au plus, un nombre de mâts correspondant pour chaque secteur de distributeur.

Dans une variante, la tête de mât 61 peut comprendre une pluralité de saillies s'étendant depuis la seconde extrémité 6e du mât 6, certaines d'entre elles comprenant au moins l'un des éléments pour le maintien ou le centrage du mât 6.

Comme cela est illustré sur la figure 1 et sur la figure 4 qui représente schématiquement une vue en coupe de la figure 1 selon un plan de coupe comprenant la direction axiale D_{A} et la direction radiale D_{R}, pour maintenir la pale 28 radialement en position, la turbine 1 comprend un premier et un second moyens de maintien radial 7, le premier moyen de maintien radial étant radialement disposé entre le second moyen de maintien radial et la virole externe de support 9.

Chaque moyen de maintien radial 7 comprend, dans le premier mode de réalisation, un épaulement 71 et un épaulement complémentaire 72 coopérant avec l'épaulement 71 auquel il est associé pour le maintien radial de la pale 28. Chaque épaulement 71 s'étend en saillie depuis une surface externe 67 du mât 6 vers l'extérieur du mât 6, c'est-à-dire vers la pale 28. Chaque épaulement complémentaire 72 s'étend en saillie depuis une surface intérieure 281 de la pale 28 vers l'intérieur de la pale 28, c'est-à-dire vers le mât 6.

Chaque épaulement 71 sur le mât 6 comprend une portion biseautée 710 formant un angle α avec la direction axiale D_{A} compris entre 20° et 70, et ici d'environ 45°. De même, chaque épaulement complémentaire 72 sur la pale 28 comprend une portion biseautée 720 formant un angle β avec la direction axiale D_{A} ayant la même valeur que l'angle α, c'est-à-dire compris entre 20° et 70, et ici d'environ 45°. La portion biseautée 710 de l'épaulement 71 et la portion biseautée 720 de l'épaulement complémentaire 72 d'un même moyen de maintien radial 7 sont disposées en regard l'une de l'autre, et même en contact selon un même plan de contact s'étendant sur toute la surface de la portion biseautée.

Dans le premier mode de réalisation illustré sur les figures 1 et 4, la turbine 1 comprend ainsi un premier moyen de maintien radial 7 comprenant un épaulement 71 et un épaulement complémentaire 72 et un second moyen de maintien radial 7 comprenant un épaulement 71 et un épaulement complémentaire 72.

Dans le premier mode de réalisation, l'épaulement complémentaire 72 du premier moyen de maintien radial est radialement disposé entre l'épaulement 71 du premier moyen de maintien radial 7 et la virole externe de support 9, et l'épaulement complémentaire 72 du second moyen de maintien radial 7 est radialement disposé entre l'épaulement 71 du second moyen de maintien radial et l'épaulement complémentaire du premier moyen de maintien radial 7, c'est-à-dire entre l'épaulement 71 du second moyen de maintien radial 7 et la virole externe de support 9.

Dans ce mode de réalisation, les forces aérodynamiques entraînent l'aube 28 qui est radialement plaquée contre la virole externe de support 9 via les deux moyens de maintien radial 7.

Sur la figure 5 est représentée schématiquement une vue en coupe selon un plan comprenant la direction axiale D_{A} et la direction radiale D_{R} d'un secteur de turbine selon un deuxième mode de réalisation de l'invention.

Le deuxième mode de réalisation de l'invention illustré sur la figure 5 diffère du premier mode de réalisation illustré sur la figure 4 en ce que l'épaulement complémentaire 72 du premier moyen de maintien radial 7 est radialement disposé entre l'épaulement 71 du premier moyen de maintien radial 7 et la virole interne de support 5, et l'épaulement complémentaire 72 du second moyen de maintien radial 7 est radialement disposé entre l'épaulement 71 du second moyen de maintien radial 7 et la virole interne de support 5. Dans ce mode de réalisation, les forces aérodynamiques entraînent l'aube 28 qui est radialement plaquée contre la virole interne de support 5 via les deux moyens de maintien radial 7.

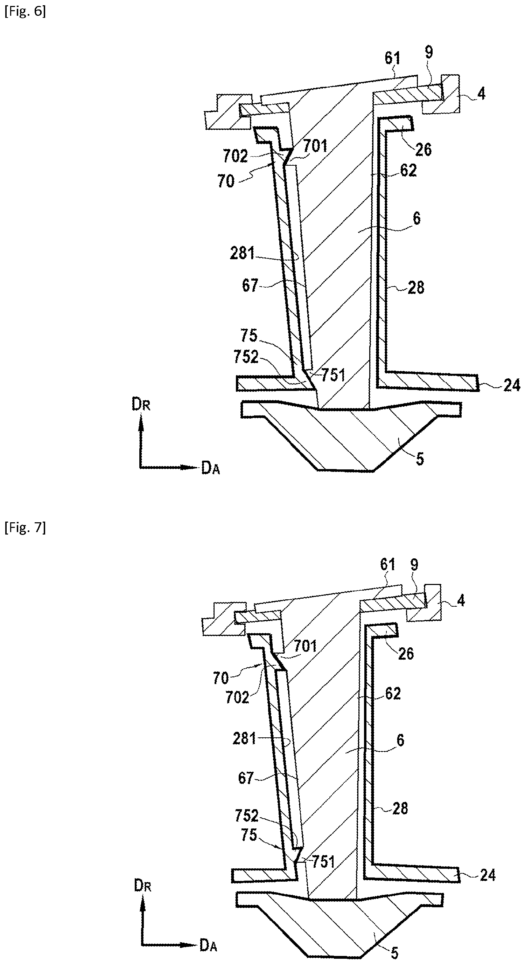

Sur la figure 6 est représentée schématiquement une vue en coupe selon un plan comprenant la direction axiale D_{A} et la direction radiale D_{R} d'un secteur de turbine selon un troisième mode de réalisation de l'invention.

Le troisième mode de réalisation de l'invention illustré sur la figure 6 diffère du premier mode de réalisation illustré sur la figure 4 en ce que la turbine 1 comprend un premier moyen de maintien radial 70 comportant un premier épaulement 701 et un premier épaulement complémentaire 702 radialement disposé entre le premier épaulement 701 et la virole externe de support 9, et un second moyen de maintien radial 75 comportant un second épaulement 751 et un second épaulement complémentaire 752 radialement disposé entre le second épaulement 751 et la virole interne de support 5, le premier moyen de maintien radial 70 état radialement disposé entre le second moyen de maintien radial 75 et la virole externe de support 9. Le premier épaulement 702 est présent au voisinage de l'extrémité radiale externe de la pale 28 suivant la direction radiale D_{R} tandis que le troisième épaulement 752 est présent au voisinage de l'extrémité radiale interne de la pale suivant la direction radiale D_{R}.

Dans ce mode de réalisation, les forces aérodynamiques entraînent l'aube 28 qui est radialement plaquée contre le mât 6 et maintenu en position radiale par rapport au mât 6.

Sur la figure 7 est représentée schématiquement une vue en coupe selon un plan comprenant la direction axiale D_{A} et la direction radiale D_{R} d'un secteur de turbine selon un quatrième mode de réalisation de l'invention.

Le quatrième mode de réalisation de l'invention illustré sur la figure 7 diffère du troisième mode de réalisation illustré sur la figure 6 en ce que le premier épaulement 701 du premier moyen de maintien radial 70 est radialement disposé entre le premier épaulement complémentaire 702 du premier moyen de maintien radial 70 et la virole externe de support 9, et en ce que le second épaulement 751 du second moyen de maintien radial 75 est radialement disposé entre le second épaulement complémentaire 752 du second moyen de maintien radial 75 et la virole interne de support 5, le premier moyen de maintien radial 70 état radialement disposé entre le second moyen de maintien radial 75 et la virole externe de support 9.

Le mât 6 permet de fournir un moyen de fixation du secteur 20 de distributeur en CMC par le haut, c'est-à-dire au carter, tout en minimisant le moment de flexion, dans la mesure où la longueur de flexion est diminuée de moitié environ de par le mât 6 traversant le secteur de distributeur. Chaque secteur 20 de distributeur du distributeur est ainsi maintenu de façon déterministe, c'est-à-dire de manière à éviter que le secteur de distributeur 20 se mette à vibrer et en maîtrisant sa position, et cela tout en permettant au secteur de distributeur 20 de se déformer sous les effets de la température et de la pression entre autre indépendamment des pièces métalliques en interface.

La turbine de turbomachine selon l'invention comprend un distributeur de turbine au moins en partie en CMC dont le montage est simplifié et adapté pour maintenir ses secteurs de distributeur de façon déterministe tout en permettant aux secteurs de se déformer indépendamment des pièces métalliques en interface, en améliorant l'étanchéité entre le mât et la virole métallique externe, et en limitant, voire en annulant, le jeu radial s'ouvrant en fonctionnement entre le mât et la pale en CMC, et ainsi maîtriser le positionnement radial de la pale en CMC à l'aide des efforts axiaux et tangentiels aérodynamiques en veine.

## Revendications

1. Turbine (1) de turbomachine comprenant un carter (4), une virole externe de support (9) en métal solidaire du carter (4), une virole interne de support (5) en métal, et un distributeur (2) annulaire de turbine définissant une direction axiale (D_{A}) et une direction radiale (D_{R}) et comportant une pluralité de secteurs (20) de distributeur en matériau composite à matrice céramique formant une couronne s'étendant entre la virole externe de support (9) et la virole interne de support (5), et, pour chaque secteur (20), un mât (6) métallique, chaque secteur (20) comportant une plateforme intérieure (24), une plateforme extérieure (26) et au moins une pale (28) s'étendant radialement entre les plateformes intérieure et extérieure (24, 26) et présentant un profil creux définissant un logement interne (280) s'étendant radialement, les plateformes intérieure et extérieure (24, 26) présentant chacune un orifice (245, 265) communiquant avec ledit logement interne (280) de la pale (28), et le mât (6) traversant lesdits orifices (245, 265) et le logement interne (280) et étant fixé audit carter (4) d'une part et en liaison avec ledit secteur (20) annulaire d'autre part,
**caractérisée en ce que** chaque pale (28) comprend au moins un premier épaulement radial (72) s'étendant en saillie selon la direction axiale (D_{A}) depuis une surface intérieure (281) de la pale (28) vers l'intérieur de la pale (28), et chaque mât (6) comprend au moins un second épaulement (71) s'étendant en saillie selon la direction axiale (D_{A}) depuis une surface extérieure (67) du mât (6) vers l'extérieur du mât (6) configurée pour coopérer avec ledit au moins un premier épaulement (72) selon la direction radiale (D_{R}) et plaquer radialement la pale (28) contre le mât (6), au moins un premier épaulement (72) comprenant une première portion biseautée (720) formant un premier angle (β) non nul avec la direction axiale (D_{A}) et au moins un second épaulement (71) comprenant une seconde portion biseautée (710) formant un second angle (α) non nul avec la direction axiale (D_{A}), le premier angle (β) et le second angle (α) étant de même mesure.

2. Turbine (1) selon la revendication 1, dans lequel le premier angle (β) et le second angle (α) sont chacun compris entre 10° et 80°.

3. Turbine (1) selon l'une des revendications 1 ou 2, dans lequel ledit au moins un second épaulement (71) est disposé selon la direction radiale (D_{R}) entre le premier épaulement (72) avec lequel il coopère pour réaliser le plaquage radial et la virole externe de support (9).

4. Turbine (1) selon l'une des revendications 1 ou 2, dans lequel ledit au moins un second épaulement (71) est disposé selon la direction radiale (D_{R}) entre le premier épaulement (72) avec lequel il coopère pour réaliser le plaquage radial et le virole interne de support (5)

5. Turbine (1) selon l'une des revendications 1 à 4, comprenant ledit au moins un premier épaulement (702) et un troisième épaulement (752) sur la pale (28) comportant respectivement une première et une troisième portions biseautées formant respectivement un premier angle et un troisième angle avec la direction axiale (D_{A}), ainsi que ledit au moins un deuxième épaulement (701) et un quatrième épaulement (751) sur le mât (6) comportant respectivement une deuxième et une quatrième portions biseautées formant respectivement un deuxième angle et un quatrième angle avec la direction axiale (D_{A}), le premier et le deuxième angles étant de même mesure et le troisième et le quatrième angles étant de même mesure et différents du premier et second angles.

6. Turbine (1) selon la revendication 5, dans lequel les premier et deuxième épaulements (702, 701) et/ou les troisième et quatrième épaulements (752, 751) sont destinés à coopérer par complémentarité de forme.

7. Turbine (1) selon l'une des revendications 5 ou 6, dans lequel le premier épaulement (702) est présent au voisinage de l'extrémité radiale externe de la pale (28) suivant la direction radiale (D_{R}) tandis que le troisième épaulement (752) est présent au voisinage de l'extrémité radiale interne de la pale suivant la direction radiale.

8. Turbine (1) selon l'une des revendications 1 à 7, dans laquelle le mât (6) est creux.

9. Turbomachine comprenant une turbine (1) selon l'une des revendications 1 à 8.

10. Aéronef comprenant au moins une turbomachine selon la revendication 9.

## Patentansprüche

1. Turbine (1) für eine Turbomaschine, umfassend ein Gehäuse, einen äußeren Trägerring (9) aus Metall, der fest mit dem Gehäuse (4) verbunden ist, einen inneren Trägerring (5) aus Metall und ein ringförmiges Turbinenleitrad (2), das eine axiale Richtung (D_{A}) und eine radiale Richtung (D_{R}) definiert und mehrere Leitradsektoren (20) aus Verbundmaterial mit Keramikmatrix beinhaltet, die einen Kranz bilden, der sich zwischen dem äußeren Trägerring (9) und dem inneren Trägerring (5) erstreckt, und für jeden Sektor (20) eine metallische Strebe (6), wobei jeder Sektor (20) eine innere Plattform (24), eine äußere Plattform (26) und mindestens ein Blatt (28) beinhaltet, das sich radial zwischen der inneren und der äußeren Plattform (24, 26) erstreckt und ein hohles Profil aufweist, das eine innere Aufnahme (280) definiert, die sich radial erstreckt, wobei die innere und die äußere Plattform (24, 26) jeweils eine Öffnung (245, 265) aufweisen, die mit der inneren Aufnahme (280) des Blattes (28) verbunden ist, und die Strebe (6) die Öffnungen (245, 265) und die innere Aufnahme (280) durchquert und einerseits an dem Gehäuse (4) befestigt ist und andererseits mit dem ringförmigen Sektor (20) in Verbindung steht,
**dadurch gekennzeichnet, dass** jedes Blatt (28) mindestens eine erste radiale Schulter (72) umfasst, die sich in der axialen Richtung (D_{A}) ausgehend von einer Innenfläche (281) des Blattes (28) zu dem inneren des Blattes (28) hin erstreckt, und jede Strebe (6) mindestens eine zweite Schulter (71) umfasst, die sich in der axialen Richtung (D_{A}) ausgehend von einer Außenfläche (67) der Strebe (6) zu dem Äußeren der Strebe (6) hin erstreckt, die dazu ausgestaltet ist, mit der mindestens einen ersten Schulter (72) in der radialen Richtung (D_{R}) zusammenzuwirken und das Blatt (28) radial an die Strebe (6) zu pressen, wobei mindestens eine erste Schulter (72) einen ersten abgeschrägten Abschnitt (720) umfasst, der einen ersten Winkel (β) ungleich null mit der axialen Richtung (D_{A}) bildet, und mindestens eine zweite Schulter (71) einen zweiten abgeschrägten Abschnitt (710) umfasst, der einen zweiten Winkel (α) ungleich null mit der axialen Richtung (D_{A}) bildet, wobei der erste Winkel (β) und der zweite Winkel (α) dasselbe Maß aufweisen.

2. Turbine (1) nach Anspruch 1, wobei der erste Winkel (β) und der zweite Winkel (α) jeweils zwischen 10° und 80° liegen.

3. Turbine (1) nach einem der Ansprüche 1 oder 2, wobei die mindestens eine zweite Schulter (71) in der radialen Richtung (D_{R}) zwischen der ersten Schulter (72), mit welcher sie zusammenwirkt, um die radiale Anpressung umzusetzen, und dem äußeren Trägerring (9) angeordnet ist.

4. Turbine (1) nach einem der Ansprüche 1 oder 2, wobei die mindestens eine zweite Schulter (71) in der der radialen Richtung (D_{R}) zwischen der ersten Schulter (72), mit welcher sie zusammenwirkt, um die radiale Anpressung umzusetzen, und dem inneren Trägerring (5) angeordnet ist.

5. Turbine (1) nach einem der Ansprüche 1 bis 4, umfassend die mindestens eine erste Schulter (702) und eine dritte Schulter (752) auf dem Blatt (28), die einen ersten bzw. einen dritten abgeschrägten Abschnitt beinhalten, die einen ersten Winkel bzw. einen dritten Winkel mit der axialen Richtung (D_{A}) bilden, sowie die mindestens eine zweite Schulter (701) und eine vierte Schulter (751) auf der Strebe (6), die einen zweiten bzw. einen vierten abgeschrägten Abschnitt beinhalten, die einen zweiten Winkel bzw. einen vierten Winkel mit der axialen Richtung (D_{A}) bilden, wobei der erste und der zweite Winkel dasselbe Maß aufweisen und der dritte und der vierte Winkel dasselbe Maß aufweisen und von dem ersten und zweiten Winkel verschieden sind.

6. Turbine (1) nach Anspruch 5, wobei die erste und zweite Schulter (702, 701) und/oder die dritte und vierte Schulter (752, 751) dazu bestimmt sind, formschlüssig zusammenzuwirken.

7. Turbine (1) nach einem der Ansprüche 5 oder 6, wobei die erste Schulter (702) benachbart zu dem radialen äußeren Ende des Blattes (28) der radialen Richtung (D_{R}) folgend vorliegt, während die dritte Schulter (752) benachbart zu dem radialen inneren Ende des Blattes der radialen Richtung folgend vorliegt.

8. Turbine (1) nach einem der Ansprüche 1 bis 7, wobei die Strebe (6) hohl ist.

9. Turbomaschine, die eine Turbine (1) nach einem der Ansprüche 1 bis 8 umfasst.

10. Luftfahrzeug, das mindestens eine Turbomaschine nach Anspruch 9 umfasst.

## Claims

1. A turbomachine turbine (1) comprising a casing (4), an outer metal support shroud (9) integral with the casing (4), an inner metal support shroud (5), and an annular turbine distributor (2) defining an axial direction (D_{A}) and a radial direction (D_{R}) and including a plurality of distributor sectors (20) made of ceramic matrix composite material forming a crown extending between the outer support shroud (9) and the inner support shroud (5),
each sector (20) including a metal mast (6), an inner platform (24), an outer platform (26) and at least one blade (28) extending radially between the inner and outer platforms (24, 26) and having a hollow profile that defines an inner housing (280) extending radially, the inner and outer platforms (24, 26) each having an opening (245, 265) communicating with said inner housing (280) of the blade (28), and the mast (6) passing through said openings (245, 265) and the inner housing (280) and being secured to said casing (4) on the one hand and connected to said annular sector (20) on the other hand,
**characterized in that** each blade (28) comprises at least one first radial shoulder (72) projecting in the axial direction (D_{A}) from an inner surface (281) of the blade (28) towards the inside of the blade (28), and each mast (6) comprises at least one second shoulder (71) projecting in the axial direction (D_{A}) from an outer surface (67) of the mast (6) towards the outside of the mast (6) configured to cooperate with said at least one first shoulder (72) in the radial direction (D_{R}) and radially press the blade (28) against the mast (6), at least one first shoulder (72) comprising a first beveled portion (720) forming a first non-zero angle (β) with the axial direction (D_{A}) and at least one second shoulder (71) comprising a second beveled portion (710) forming a second non-zero angle (α) with the axial direction (D_{A}), the first angle (β) and the second angle (α) having the same value.

2. The turbine (1) according to claim 1, wherein the first angle (β) and the second angle (α) are each comprised between 10° and 80°.

3. The turbine (1) according to one of claims 1 or 2, wherein said at least one second shoulder (71) is disposed in the radial direction (D_{R}) between the first shoulder (72) with which it cooperates to achieve the radial pressing and the outer support shroud (9).

4. The turbine (1) according to one of claims 1 or 2, wherein said at least one second shoulder (71) is disposed in the radial direction (D_{R}) between the first shoulder (72) with which it cooperates to achieve the radial pressing and the inner support shroud (5).

5. The turbine (1) according to one of claims 1 to 4, comprising said at least one first shoulder (702) and a third shoulder (752) on the blade (28) including respectively a first and a third beveled portions respectively forming a first angle and a third angle with the axial direction (D_{A}), as well as said at least one second shoulder (701) and one fourth shoulder (751) on the mast (6) including respectively a second and a fourth beveled portions respectively forming a second angle and a fourth angle with the axial direction (D_{A}), the first and the second angles being of the same measure and the third and the fourth angles being of the same measure and different from the first and second angles.

6. The turbine (1) according to claim 5, wherein the first and second shoulders (702, 701) and/or the third and fourth shoulders (752, 751) are intended to cooperate by shape complementarity.

7. The turbine (1) according to one of claims 5 or 6, wherein the first shoulder (702) is present in the vicinity of the outer radial end of the blade (28) in the radial direction (D_{R}) while the third shoulder (752) is present in the vicinity of the inner radial end of the blade in the radial direction.

8. The turbine (1) according to one of claims 1 to 7, wherein the mast (6) is hollow.

9. A turbomachine comprising a turbine (1) according to one of claims 1 to 8.

10. An aircraft comprising at least one turbomachine according to claim 9.
